Europäisches Patentamt

European Patent Office

Office européen des brevets

(19)

(11) **EP 0 654 369 B1**

(12) **EUROPÄISCHE PATENTSCHRIFT**

(45) Veröffentlichungstag und Bekanntmachung des Hinweises auf die Patenterteilung:
**31.07.1996 Patentblatt 1996/31**

(51) Int. Cl.$^6$: **B60G 17/056**

(21) Anmeldenummer: **93120022.4**

(22) Anmeldetag: **11.12.1993**

(54) **Federungssystem für Kraftfahrzeuge sowie Dämpfungsventil**

Motor vehicle suspension and damping valve

Suspension pour véhicules à moteur et soupape d'amortissement

(84) Benannte Vertragsstaaten:
**BE DE ES FR GB IT NL SE**

(30) Priorität: **16.12.1992 DE 4242534**
**29.04.1993 DE 4314021**

(43) Veröffentlichungstag der Anmeldung:
**24.05.1995 Patentblatt 1995/21**

(73) Patentinhaber: **HEMSCHEIDT FAHRWERKTECHNIK GmbH & Co.**
**42781 Haan (DE)**

(72) Erfinder: **Runkel, Walter, Dr., Dipl.-Ing.**
**D-42289 Wuppertal (DE)**

(74) Vertreter: **Patentanwälte**
**Dr. Solf & Zapf**
**Postfach 13 01 13**
**42028 Wuppertal (DE)**

(56) Entgegenhaltungen:
| | |
|---|---|
| EP-A- 0 389 828 | EP-A- 0 416 987 |
| EP-A- 0 504 624 | EP-A- 0 515 991 |
| DE-A- 3 939 485 | GB-A- 2 196 092 |
| GB-A- 2 255 753 | US-A- 5 107 969 |

## Beschreibung

Die vorliegende Erfindung betrifft ein Federungssystem insbesondere zur Radabstützung bei Kraftfahrzeugen, mit mindestens einem aus einem Zylinder und einem darin zum Ein- und Ausfedern beweglich geführten Kolben bestehenden, hydraulischen Federbein, wobei beim Einfedern des Federbeins zumindest ein Teil des Hydraulikmediums insbesondere in einen hydropneumatischen Federspeicher verdrängt wird und das Hydraulikmedium beim Ausfedern wieder zurückströmt, wobei zumindest die Ausfederungsströmung des Federbeins über einen Strömungsweg eines Dämpfungsventils geführt und dadurch gedämpft wird, daß der Strömungsweg mittels eines Ventilelementes beim Auftreten der Ausfederungsströmung ständig alternierend geschlossen und wieder geöffnet wird.

Ferner betrifft die Erfindung auch ein insbesondere für das genannte Federungssystem verwendbares Dämpfungsventil mit einem in einem Strömungsweg für ein Hydraulikmedium derart angeordneten und derart ausgebildeten Ventilelement, daß der Strömungsweg bei einer Strömung des Hydraulikmediums zur Erzeugung einer Dämpfungswirkung durch das Ventilelement ständig alternierend geschlossen und wieder geöffnet wird.

Üblicherweise wird zur Dämpfung eine Hydraulikströmung über eine Drosselung geführt, wobei nach dem "Strömungswiderstandsprinzip" bewußt Wirbel und Turbulenzen in der zu dämpfenden Strömung erzeugt werden. Dies führt aber zu einer insbesondere bei hydropneumatischen Systemen sehr nachteiligen Erwärmung des Hydraulikmediums, denn die Wärme überträgt sich auf das für die Federwirkung maßgebliche pneumatische Medium, wodurch sich die Federkennlinie und damit gegebenenfalls auch das jeweilige statische Fahrzeugniveau ändern können. Zudem können durch die Turbulenzen insbesondere bei hohen Strömungsgeschwindigkeiten (schnelle Federbewegungen des jeweiligen Federbeins) sogar schädliche Erosionserscheinungen im Bereich der Drosselung auftreten.

Aus der EP-A-0 515 991 sind demgegenüber ein Federungssystem und ein Dämpfungsventil der gattungsgemäßen Art bekannt, wobei - in Abkehr von dem bisherigen Dämpfungs- bzw. Drosselprinzip mit Wirbel- und Turbulenzbildung - eine "Dämpfungswirkung" durch ein gesteuertes, dosiertes, sukzessives "Nachlassen" von Hydraulikmedium entsteht. Dies führt zu einer "zeitlichen Streckung" des Ausfederungsvorganges bei ansonsten gleichbleibender Energie; es erfolgt ein zeitverzögerter Druck- und Energieabbau, indem die beim Einfedern gespeicherte Energie während des nachfolgenden Ausfederns "portionsweise" abgegeben wird, wodurch praktisch eine Verringerung der Federkraft in Ausfederungsrichtung und damit quasi die Wirkung einer "Dämpfung" erreicht wird. Jeweils bei geschlossenem Strömungsweg wird ein bestimmtes Volumen des Hydraulikmediums in dem Federbein gekammert, und es erfolgt durch eine geringfügige Expansion ein rapider Druckabfall gegenüber dem Druck des Federspeichers. Diese Druckdifferenz wird in der bevorzugten Ausführung des bekannten Systems dazu ausgenutzt, um hiermit praktisch selbsttätig das alternierende Schließen und Öffnen der Verbindung zwischen Federbein und zugehörigem Federspeicher zu steuern. Das Ventilelement bildet hierzu eine Art Rückschlagventil, indem es in Schließrichtung mit dem hydraulischen Druck des Federbeins und zusätzlich mit einer elastischen Vorspannkraft beaufschlagt ist und in Öffnungsrichtung mit dem hydraulischen Druck des Federspeichers. Hierdurch schließt das Ventilelement selbsttätig bei Druckgleichgewicht oder auch schon bei einer nur noch geringen Druckdifferenz, und bei zunehmender Druckdifferenz, d.h. bei Erreichen eines insbesondere voreinstellbaren Differenzbetrages, öffnet das Ventilelement den Strömungsweg.

Dieses bekannte Federungssystem hat sich im wesentlichen bewährt. So wird hierbei insbesondere ein schädliches, schnelles "Rückschlagen" der Fahrzeugräder in Ausfederungsrichtung vermieden. Zudem kann eine gute Stabilisierung des Fahrzeuges insbesondere gegen seitliches Wanken (Neigen um die Fahrzeuglängsachse z.B. bei Kurvenfahrt) erreicht werden, indem das Ventilelement zusätzlich auch mit einem hydraulischen Steuerdruck in Schließrichtung vorgespannt wird, wobei als Steuerdruck der hydraulische Druck eines zweiten, in dem Fahrzeug auf der gegenüberliegenden Seite angeordneten Federbeins verwendet wird. Es wird hierdurch sehr effektiv einer "Kippneigung" des Fahrzeuges entgegengewirkt. Nun hat sich allerdings gezeigt, daß ein mit diesem bekannten System ausgerüstetes Fahrzeug in manchen Fällen noch ein recht "hartes", unkomfortables Federungsverhalten hat.

Der vorliegenden Erfindung liegt daher die Aufgabe zugrunde, ausgehend von dem genannten Stand der Technik ein Federungssystem zu schaffen, mit dem unter Beibehaltung der guten Dämpfungswirkung - und insbesondere auch der Möglichkeit einer effektiven Fahrzeug-Stabilisierung - der Federungskomfort wesentlich verbessert werden kann. Ferner soll auch ein entsprechendes Dämpfungsventil geschaffen werden.

Erfindungsgemäß wird dies durch einen das Ventilelement des Dämpfungsventils überbrückenden, derart ausgebildeten Bypass erreicht, daß in einem statischen, im wesentlichen strömungslosen Zustand über den Bypass ein Druckausgleich zwischen den beidseitig des Ventilelementes angeordneten Abschnitten des Strömungsweges gewährleistet ist und in einem dynamischen Zustand bei Auftreten einer Strömung der Bypass diese Druckausgleichsfunktion im wesentlichen verliert.

Die Erfindung beruht auf der Erkenntnis, daß aufgrund der bei dem bekannten Federungssystem vorgesehenen "Differenzdrucksteuerung" des Dämpfungsventilelementes nach der Ausfederungsbewegung, d.h. nach Beendigung der Ausfederungsströmung, oftmals ein bestimmter Differenzdruck verbleibt, der dann bei einem nachfolgenden Einfedern zunächst überwunden werden muß, bevor ein zum Ausfederungsströmungsweg parallel geschaltetes, bei einer Einfederungsströmung öffnendes Rückschlagventil öffnet. Dies führt zu einem "harten" Anfedern in Einfederungsrichtung, was sich dadurch nachteilig bemerkbar macht, daß die jeweils im Fahrzeug befindlichen Personen teilweise recht harte Schläge mitbekommen. Zudem wurde erkannt, daß insbesondere mit der zur Kippstabilisierung vorgesehenen Vorspannung jedes Ventils mit dem hydraulischen Druck des jeweils gegenüberliegenden Federbeins besondere Probleme auftreten, weil dann eine auf die beiden Fahrzeugseiten ungleich verteilte Last auch zu unterschiedlichen Federungseigenschaften auf den beiden Fahrzeugseiten führt. Ist beispielsweise die Last auf der rechten Seite höher als auf der linken Seite, so ist das Dämpfungsventil der linken Seite stärker vorgespannt als auf der rechten Seite; auf der linken Seite ist daher die Federung "härter" als auf der rechten Seite.

Nun wird durch die vorliegende Erfindung vorteilhafterweise erreicht, daß sich die beiden das Dämpfungsventilelement beaufschlagenden Drücke im statischen Zustand stets über den Bypass so ausgleichen können, daß bei einem nachfolgenden Einfedern kein Differenzdruck mehr überwunden werden muß; es ist vorteilhafterweise ein sehr "weiches", komfortables Anfedern gewährleistet. Tritt nun aber eine Ausfederungsströmung auf, so wirkt der erfindungsgemäße Bypass so, als wäre er geschlossen. Dies kann dadurch erreicht werden, daß der Bypass einen derart geringen Strömungsquerschnitt aufweist, daß er einer Strömung einen solch großen Strömungswiderstand entgegensetzt, daß dies einem Schließen des Bypasses von der Wirkung her praktisch gleichkommt In einer besonders vorteilhaften Ausführungsform der Erfindung wird zudem der Bypass zusätzlich zwangsweise durch eine in Abhängigkeit von den jeweiligen Strömungs- und/oder Druckverhältnissen steuerbare Verschlußeinrichtung geöffnet oder geschlossen.

Hierzu ist in einer zweckmäßigen Ausgestaltung der Erfindung ein Verschlußstößel vorgesehen, der zum Schließen und Öffnen des insbesondere als Durchgangsöffnung des Ausfederungs-Ventilelementes gebildeten Bypasses mit diesem bzw. mit der Mündungsöffnung der Durchgangsöffnung ventilartig zusammenwirkt, und zwar über ein ventilkegelartiges Ende. Da dieses Ende somit in demjenigen Abschnitt des Strömungsweges angeordnet ist, in dem der hydraulische Druck des Federbeins herrscht, wird der Verschlußstößel hierdurch mit einer Kraft beaufschlagt, die die Tendenz hat, ihn von dem Ventilelement weg in seine den Bypass öffnende Stellung zu verschieben. Auf seiner gegenüberliegenden Seite wird der Verschlußstößel aber vorzugsweise mit einem Steuerdruck beaufschlagt, wodurch eine entgegengesetzte, in Schließrichtung wirkende Kraftkomponente entsteht. Als Steuerdruck wird vorzugsweise der hydraulische Druck eines in einem Fahrzeug gegenüberliegenden Federbeins verwendet. Um zu vermeiden, daß bei lastabhängigen Druckunterschieden bereits eine ungewollte Reaktion der Verschlußeinrichtung erfolgt, ist bevorzugt ein Druckausgleich vorgesehen. Für diesen Druckausgleich kann ein den Verschlußstößel hülsenartig umschließender Ringkolben vorgesehen sein, der durch eine spezielle Druckbeaufschlagung seiner beiden gegenüberliegenden Ringflächen und dadurch bewirkte, bestimmte Anschlagstellungen den Verschlußstößel zu dessen Druckausgleich beeinflußt. Bei dieser Ausführung kann es allerdings unter bestimmten Betriebsbedingungen zu einem ungewollten Öffnen des Bypasses kommen, wodurch dem Ausfederungs-Ventilelement dann aber die Vorspannkraft-Komponente fehlt, was zu einer nicht ganz optimalen Stabilisierung führt.

Eine weitere Verbesserung derart, daß mit konstruktiv besonders einfachen Mitteln eine noch zuverlässigere Wirkungsweise unter allen Betriebsbedingungen gewährleistet ist, kann durch einen erfindungsgemäß vorgesehenen Stufenkolben erreicht werden, der praktisch eine "einstückige Zusammenfassung" des Verschlußstößels und des Ringkolbens gemäß der oben erläuterten Ausführung darstellt, wodurch in konstruktiver Hinsicht eine Vereinfachung insbesondere durch Einsparung von Dichtungselementen erreicht wird. Zudem läßt sich der Stufenkolben hinsichtlich seiner druckbeaufschlagten Flächen besonders leicht auslegen, da aufgrund der Einstückigkeit des Stufenkolbens sich eine resultierende Axialkraft sehr einfach durch die Summe aller Teilkräfte, die sich jeweils aus dem Produkt "Druck mal von diesem beaufschlagter Fläche" ergeben, ermitteln läßt.

Vorzugsweise ist bei dem erfindungsgemäßen Federungssystem durch ein Zusammenwirken von jeweils zwei Federbeinen auch eine Stabilisierung insbesondere gegen seitliches Wanken vorgesehen, wobei eine Ansteuerung wiederum mit dem als Steuerdruck verwendeten, hydraulischen Druck des jeweils gegenüberliegenden Federbeins erfolgt. Allerdings ist nun erfindungsgemäß ein statischer Druckausgleich jeweils derart vorgesehen, daß auch bei ungleichmäßiger Belastungsverteilung auf beiden Fahrzeugseiten optimale, komfortable Federungseigenschaften gewährleistet sind, indem nur bei dynamischen Vorgängen, d.h. bei dynamischen Veränderungen des jeweiligen hydraulischen Druckes auf einer der beiden Fahrzeugseiten, die Stabilisierung durch gesteigerte Vorspannung des jeweils gegenüberliegenden Dämpfungsventils wirksam wird. Dies wird in der Beschreibung eines bevorzugten Ausführungsbeispiels noch genauer erläutert werden.

Im übrigen sind vorteilhafte Ausgestaltungsmerkmale und Ausführungsvarianten der Erfindung in den von dem jeweiligen Haupt- bzw. Nebenanspruch abhängigen Unteransprüchen sowie in der folgenden Beschreibung enthalten.

Anhand der Zeichnung soll im folgenden die Erfindung beispielhaft näher erläutert werden. Dabei zeigen:

Fig. 1    ein bevorzugtes Ausführungsbeispiel eines erfindungsgemäßen Federungssystems mit zwei einer Fahrzeugachse zugeordneten, auf gegenüberliegenden Seiten des Fahrzeugs angeordneten Federbeinen sowie mit zugehörigen Federspeichern und Dämpfungsventilen, wobei die Einzelkomponenten jeweils in prinzipiellen, stark vereinfachten Längsschnitten dargestellt sind,

Fig. 2    eine gegenüber Fig. 1 vergrößerte Darstellung eines der beiden Dämpfungsventile,

Fig. 3    eine Darstellung analog zu Fig. 2, jedoch in einer Ausführungsvariante, und

Fig. 4    eine weitere, bevorzugte Ausführungsform eines erfindungsgemäßen Dämpfungsventils in einer Darstellung analog zu Fig. 2 bzw. 3.

In den verschiedenen Figuren der Zeichnung sind gleiche Teile und Komponenten stets mit den gleichen Bezugszeichen versehen, so daß jede eventuell nur einmal vorkommende Beschreibung eines Teils analog auch bezüglich der anderen Zeichnungsfiguren gilt, in denen dieses Teil mit dem entsprechenden Bezugszeichen ebenfalls zu erkennen ist.

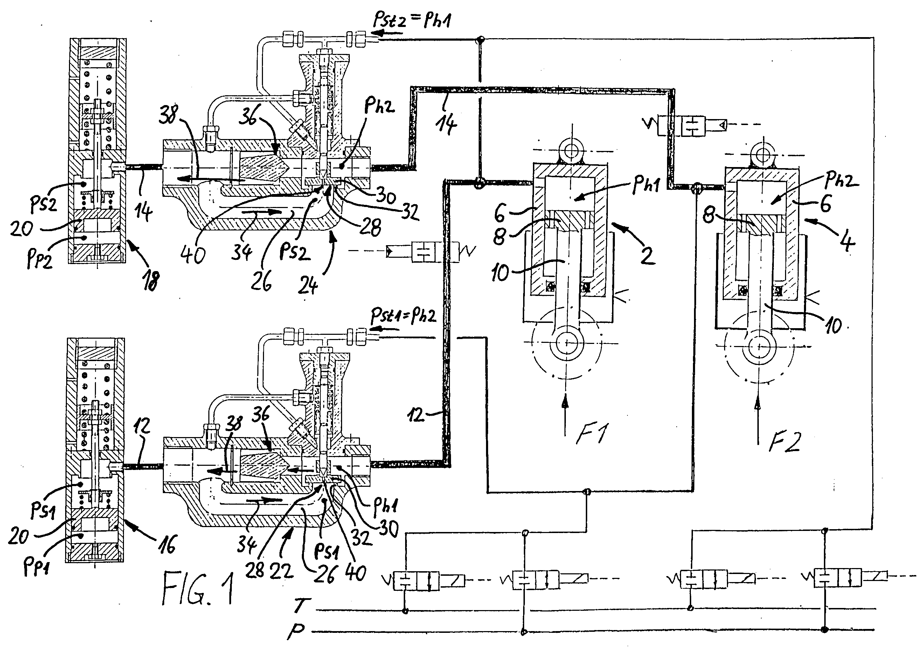

Bei dem in Fig. 1 dargestellten, bevorzugten Ausführungsbeispiel eines erfindungsgemäßen Federungssystems sind zwei hydraulische Federbeine 2, 4 vorgesehen, die jeweils einem Rad einer Fahrzeugachse zugeordnet und demzufolge auf gegenüberliegenden Seiten eines Fahrzeugs (links und rechts) angeordnet sind. Jedes Federbein 2, 4 besteht aus einem Zylinder 6 und einem in diesem zum Einfedern und Ausfedern beweglich geführten Kolben 8, der mit einer abgedichtet aus dem Zylinder 6 nach außen führenden Kolbenstange 10 verbunden ist. Die Federbeine 2, 4 werden in bekannter Weise mit dem Zylinder 6 einerseits und der Kolbenstange 10 andererseits zwischen einer ungefederten Masse (Fahrzeugrad/-achse) und einer gefederten Masse (Fahrzeugrahmen/-aufbau) angeordnet.

Jedes Federbein 2, 4 enthält ein Hydraulikmedium, welches aufgrund einer das Federbein 2 bzw. 4 jeweils belastenden Gewichtskraft F1 bzw. F2 unter einem hydraulischen Druck $p_{h1}$ bzw. $p_{h2}$ steht. Jedes Federbein 2, 4 ist über eine hydraulische Verbindung 12 bzw. 14 vorzugsweise mit einem hydropneumatischen Federspeicher 16 bzw. 18 verbunden. In jedem Federspeicher 16, 18 wirkt ein mit einem pneumatischen Vorspanndruck $p_{P1}$ bzw. $p_{P2}$ vorgespanntes, kompressibles Medium insbesondere über einen freibeweglich geführten Trennkolben 20 gegen das hydraulische Medium, welches hierdurch unter einem hydraulischen Speicherdruck $p_{s1}$ bzw. $p_{s2}$ steht. Hierbei

ist im statischen Zustand jeweils der hydraulische Druck im Federbein gleich dem zugehörigen hydraulischen Speicherdruck.

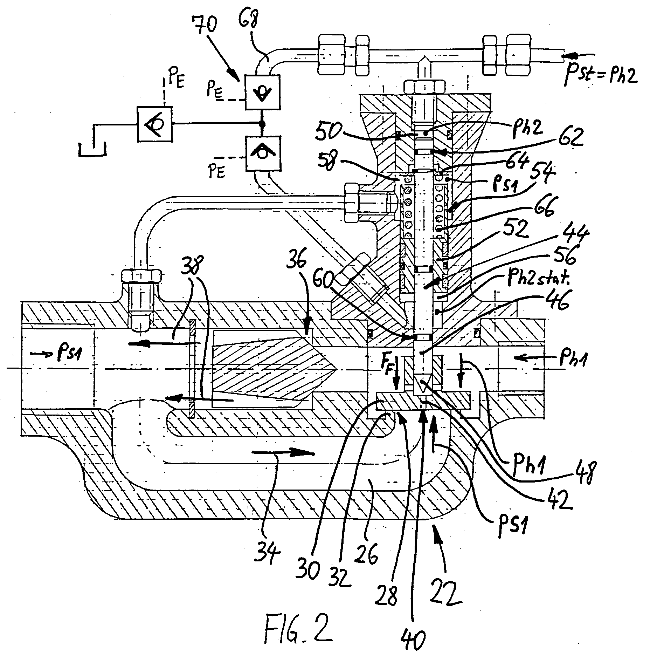

Zwischen jedem Federbein 2, 4 und seinem zugehörigen Federspeicher 16, 18 ist in der jeweiligen Verbindung 12, 14 ein Dämpfungsventil 22 bzw. 24 angeordnet (s. auch Fig. 2). In jedem Dämpfungsventil 22, 24 ist für eine Ausfederungsströmung vom Federspeicher zum Federbein ein Strömungsweg 26 gebildet, in dem ein rückschlagventilartiges Ausfederungsventil 28 mit einem Ventilelement 30 und einem Ventilsitz 32 derart angeordnet ist, daß mittels des Ventilelementes 30 der Strömungsweg 26 bei Auftreten der Ausfederungsströmung (Pfeilrichtung 34) ständig alternierend (abwechselnd) geschlossen und wieder geöffnet wird. Bei Auftreten einer umgekehrten Einfederungsströmung schließt das Ausfederungsventil 28; diese Einfederungsströmung wird dann über ein hydraulisch parallelgeschaltetes, gegensinnig wirkendes Rückschlagventil 36 geführt (Pfeilrichtung 38).

Bevorzugt ist das Ventilelement 30 so ausgebildet bzw. angeordnet, daß es den Strömungsweg 26 selbsttätig, "eigengesteuert", d.h. ohne äußere Betätigung, ständig abwechselnd schließt und öffnet. Wie sich insbesondere aus Fig. 2 ergibt, ist hierzu das Ventilelement 30 einerseits in seiner Öffnungsrichtung mit dem hydraulischen Druck $p_{S1}$ (bzw. $p_{S2}$) des jeweiligen Federspeichers 16 (bzw. 18) und andererseits in seiner Schließrichtung mit dem hydraulischen Druck $p_{h1}$ (bzw. $p_{h2}$) des jeweiligen Federbeins 2 (bzw. 4) sowie zusätzlich mit einer federelastischen, zweckmäßigerweise durch eine nicht dargestellte Druckfeder erzeugten Schließkraft $F_F$ beaufschlagt. Jeweils im geschlossenen Zustand des Ausfederungsventils 28 tritt aufgrund einer geringfügigen weitergehenden Ausfederungsbewegung des Federbeins 2 bzw. 4 eine geringfügige Expansion des darin gekammerten Hydraulikmediums und damit zwangsläufig ein rapider Druckabfall auf, so daß der Speicherdruck $p_{s1}$, $p_{s2}$ dann jeweils größer als der Federbeindruck $p_{h1}$, $p_{h2}$ ist. Aufgrund dieser Druckdifferenz öffnet dann das Ventil 28, weil die druckbedingte Öffnungskraft größer als die insgesamt wirkende, druck- und schließfederbedingte Schließkraft wird. Bei so geöffnetem Ventil 28 erfolgt wieder ein Druckausgleich, und bei Druckgleichgewicht oder schon bei einem noch geringen Betrag einer Druckdifferenz schließt das Ventil 28 wieder, weil dann die Schließkraft größer als die Öffnungskraft wird. Dieser Vorgang wiederholt sich so lange, bis die Ausfederungsbewegung des Federbeins 2, 4 ganz beendet ist.

Erfindungsgemäß ist nun jeweils ein das Ausfederungsventil 28 und sein Ventilelement 30 überbrückender Bypass 40 vorgesehen (s. hierzu insbesondere Fig. 2 bis 4), der derart ausgebildet ist, daß in einem statischen, im wesentlichen strömungslosen Zustand über den Bypass 40 ein Druckausgleich zwischen den beidseitig des Ventilelementes 30 angeordneten Abschnitten des Strömungsweges 26 gewährleistet ist und in einem dynamischen Zustand bei Auftreten einer Strömung der Bypass 40 diese Druckausgleichsfunktion im wesentlichen verliert. Bevorzugt ist hierbei der Bypass 40 als ein sich durch das Ventilelement 30 erstreckender Durchgangskanal 42 ausgebildet.

Um die genannte Wirkungsweise des Bypasses 40 zu erreichen, kann es bereits ausreichend sein, wenn der Bypass einen derart geringen Strömungsquerschnitt besitzt, daß er bei Auftreten der Strömung aufgrund eines hohen Strömungswiderstandes hinsichtlich seiner Druckausgleichsfunktion praktisch geschlossen ist, d.h. er wirkt dann so, als wäre er im wesentlichen geschlossen. In den dargestellten, bevorzugten Ausführungsformen wird der Bypass 40 aber zusätzlich noch durch eine in Abhängigkeit von den jeweiligen Strömungs- und/oder Druckverhältnissen steuerbare Verschlußeinrichtung 44 geöffnet oder geschlossen. Dies führt zu dem wesentlichen Vorteil, daß durch eine spezielle, im folgenden noch genauer zu erläuternde Ansteuerung der Verschlußeinrichtung 44 der Bypass 40 auch in Abhängigkeit von den in dem anderen, jeweils gegenüberliegenden Federbein 4/2 und seinem zugeordneten Federspeicher 18/16 herrschenden Strömungs- und/oder Druckverhältnissen erfolgen kann, was für eine Fahrzeugstabilisierung wesentliche Vorteile hat.

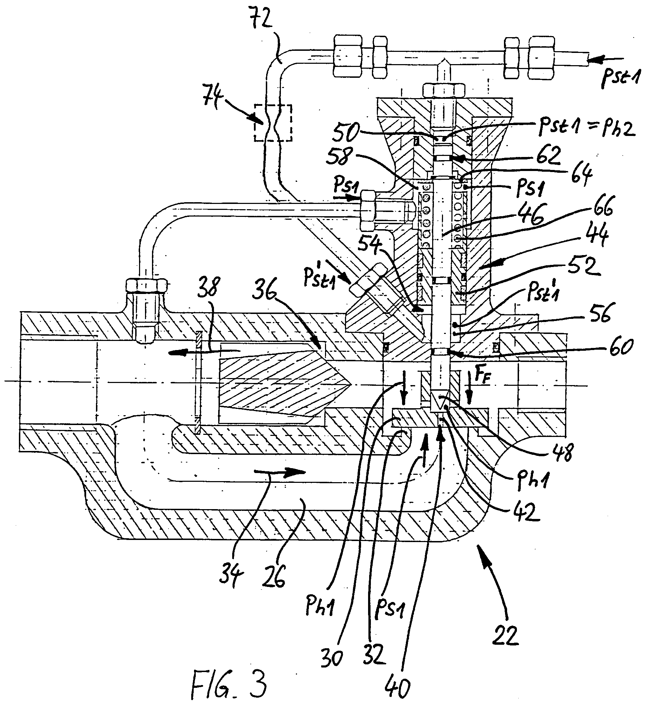

Gemäß Fig. 2 und 3 wirkt die Verschlußeinrichtung 44 mit einem Verschlußstößel 46 in Schließrichtung des Ventilelementes 30, d.h. von dessen dem Ventilsitz 32 abgekehrten Seite her, auf den den Bypass 40 bildenden Durchgangskanal 42 des Ventilelementes 30. Der Verschlußstößel 46 bildet mit der Mündungsöffnung des Durchgangskanals 42 praktisch ein Sitzventil, wobei der Verschlußstößel 46 vorzugsweise ein ventilkegelartiges Ende 48 besitzt. Da dieses Ende 48 somit in demjenigen Abschnitt des Strömungsweges 26 angeordnet ist, in dem der hydraulische Druck $p_{h1}$ bzw. $p_{h2}$ des Federbeins 2 bzw. 4 herrscht, wird der Verschlußstößel 46 auf dieser Seite mit diesem hydraulischen Federbeindruck beaufschlagt, wodurch eine Kraft entsteht, die die Tendenz hat, den Verschlußstößel 46 von dem Ventilelement 30 weg in seine den Bypass 40 öffnende Stellung zu verschieben. Nun ist zweckmäßigerweise aber der Verschlußstößel 46 auf seiner dem Ventilelement 30 abgekehrten Seite umfänglich abgedichtet in einer Steuerdruckkammer 50 geführt und hier mit einem insbesondere hydraulischen Steuerdruck $p_{St1}$ bzw. $p_{St2}$ beaufschlagt bzw. beaufschlagbar, wobei durch Beaufschlagung mit diesem Steuerdruck eine Kraftkomponente entsteht, die die Tendenz hat, den Verschlußstößel 46 in seine den Bypass 40 schließende Stellung in Richtung des Ventilelementes 30 zu verschieben. Bei dem paarweisen Zusammenwirken jeweils zweier Federbeine 2, 4 ist es dann vorteilhaft, als Steuerdruck jeweils den hydraulischen Druck des anderen, gegenüberliegenden Federbeins 4 bzw. 2 zu verwenden; es gilt $p_{St1} = p_{h2}$ sowie $p_{St2} = p_{h1}$. Um nun aber zu vermeiden, daß bei eventuellen lastabhängigen, d.h. durch unterschiedliche Gewichtskräfte F1, F2 (vgl. Fig. 1) auftretenden Druckunterschieden zwischen den beiden hydraulischen Drücken $p_{h1}$ ($= p_{St2}$) und $p_{h2}$ ($= p_{St1}$) bereits eine ungewollte Reaktion der Verschlußeinrichtung 44 erfolgt, ist erfindungsgemäß vorgesehen, daß der Verschlußstößel 46 im statischen Zustand derart druckausgeglichen ist, daß er dann stets in seiner den Bypass 40 öffnenden Stellung steht, wobei dieser Druckausgleich in einem dynamischen Zustand, und zwar insbesondere dann, wenn sich einer der beiden hydraulischen Drücke der beiden Federbeine 2, 4 dynamisch, d.h. unter Auftreten jeweils einer Strömung, ändert, so aufgehoben wird, daß der Verschlußstößel in seine den Bypass 40 schließende Stellung gebracht wird. Hierdurch wird dann vorzugsweise auch das jeweilige Ventilelement 30 mit einer in seiner Schließrichtung wirkenden Vorspannkraft beaufschlagt, die zu einer "härteren" Dämpfung einer in diesem Zustand auftretenden Ausfederungsströmung führt.

Wie sich ferner insbesondere aus Fig. 2 und 3 ergibt, ist in diesen bevorzugten Ausführungsbeispielen für den genannten Druckausgleich des Verschlußstößels 46 ein Ringkolben 52 vorgesehen, der den Verschlußstößel 46 hülsenartig umschließt. Hierbei ist der Verschlußstößel 46 umfänglich abgedichtet sowie relativverschiebbar durch diesen Ringkolben geführt. Der Ringkolben 52 seinerseits ist umfänglich abgedichtet und in axialer Richtung, d.h. in Bewegungsrichtung des Verschlußstößels 46, verschiebbar in einer Gehäusekammer 54 geführt, so daß er diese Gehäusekammer 54 in zwei Teilkammern 56, 58 unterteilt, und zwar in eine erste Teilkammer 56, die auf der dem Ventilelement 30 zugekehrten Seite des Ringkolbens 52 angeordnet und über eine umfänglich abgedichtete Durchführung 60 für den Verschlußstößel 46 von dem mit dem hydraulischen Druck $p_{h1}$ bzw. $p_{h2}$ des Federbeins 2 bzw. 4 beaufschlagten Bereich des Strömungsweges 26 getrennt ist, sowie in eine zweite Teilkammer 58, die auf der dem Ventilelement 30 abgekehrten Seite des Ringkolbens 52 liegend über eine weitere abgedichtete Stößel-Durchführung 62 von der Steuerdruckkammer 50 getrennt ist. Im Bereich der zweiten Teilkammer 58 ist zwischen dem Ringkolben 52 und einem Widerlager 64 des Verschlußstößels 46 eine vorgespannte Druckfeder 66 derart angeordnet, daß in einem drucklosen Zustand einerseits der Verschlußstößel 46 mit dem Widerlager 64 in einer von dem Ventilelement 30 und dem Bypass 40 beabstandeten Anschlagstellung und andererseits der Ringkolben 52 in einer die erste Teilkammer 46 bis auf ein Minimalvolumen verkleinernden Anschlagstellung stehen. Dabei ist nun des weiteren erfindungsgemäß vorgesehen, daß der Verschlußstößel 46 und der Ringkolben 52 zumindest annähernd gleich große Querschnittsflächen (druckbeaufschlagbare Stirnflächen) besitzen.

In der in Fig.2 veranschaulichten Ausführungsform ist hierbei nun vorgesehen, daß in der ersten Teilkammer 56 des dem einen Federbein 2 (4) zugeordneten Dämpfungsventils 22 (24) zunächst einmalig in einem statischen Zustand des Fahrzeugs bzw. der beiden Federbeine 2, 4 der hydraulische Druck $p_{h2}$ ($p_{h1}$) des

anderen Federbeins 4 (2) gekammert (eingeschlossen) wird. Hierzu ist die erste Teilkammer 56 über eine hydraulische Verbindung 68 mit dem jeweils anderen, gegenüberliegenden Federbein verbunden, wobei in dieser Verbindung 68 eine Schaltventilanordnung 70 angeordnet ist, die in dem dargestellten Ausführungsbeispiel aus zwei gegensinnig schließenden, hydraulisch über einen Entsperrdruck $p_E$ entsperrbaren Rückschlagventilen besteht. Der zwischen diesen Rückschlagventilen liegende Bereich der Verbindung 68 ist über ein weiteres hydraulisch entsperrbares Rückschlagventil mit einem Druckmitteltank verbunden bzw. verbindbar. Durch geeignete Ansteuerung dieser Schaltventilanordnung 70 kann somit die erste Teilkammer 56 mit dem hydraulischen Druck $p_{h2}(p_{h1})$ des jeweils gegenüberliegenden Federbeins 4(2) beaufschlagt werden. Danach wird die Verbindung 68 geschlossen, so daß der Druck dann gekammert in der ersten Teilkammer 56 herrscht. Hierdurch stellt sich nun die Druckfeder 66 durch eine Verschiebung des Ringkolbens 52 nach dem Prinzip einer "Druckwaage" bzw. "Kräftewaage" genau auf eine Gegenkraft ein, die unabhängig von den nun den Verschlußstößel 46 und den Ringkolben 52 beaufschlagenden Drücken den Verschlußstößel 46 über sein Widerlager 64 in seiner den Bypass 40 öffnenden Stellungen hält. Diese Ausgleichsstellung wird erst dann aufgehoben, wenn sich einer der beiden hydraulischen Drücke der Federbeine dynamisch ändert. Ein Einfedern des auf der gegenüberliegenden Seite angeordneten Federbeins 4 (2) führt zu einem Anstieg des Steuerdrucks $p_{St}$ gegenüber dem auf dieser Seite im Federbein 2 (4) herrschenden hydraulischen Druck $p_{h1}$ ($p_{h2}$), so daß dann der Verschlußstößel 46 in Richtung des Ventilelementes 30 verschoben wird und so einerseits den Bypass 40 schließt sowie andererseits das Ventilelement 30 mit einer Vorspannkraft beaufschlagt, die zu einer verstärkten Dämpfung in Ausfederungsrichtung auf dieser Fahrzeugseite führt. Hierdurch wird bei einer Kurvenfahrt, wobei jeweils das auf der Außenseite liegende Federbein einfedert, wirksam einem Ausfedern des Federbeins auf der Kurveninnenseite entgegengewirkt. Es handelt sich folglich um eine sehr effektive Stabilisierung gegen Wankbewegungen des Fahrzeugs.

Im Falle der Ausführung nach Fig. 2 ist es nun ferner vorteilhaft, die zweite Teilkammer 58 ständig mit dem hydraulischen Speicherdruck $p_{s1}$ ($p_{s2}$) des zugehörigen Federspeichers 16 (18) zu beaufschlagen. Diese vorteilhafte Weiterbildung ist insofern von Vorteil, als hierdurch die Druckfeder 66 in ihrer Wirkung unterstützt wird, indem der Speicherdruck dann auf dieser Seite den Ringkolben 52 beaufschlagt. Es reicht hierdurch eine einfache und preiswerte Druckfeder 66 mit nur relativ geringer Federkraft aus.

Bei der in Fig. 3 veranschaulichten Ausführungsvariante ist die erste Teilkammer 56 über eine hydraulische Verbindung 72 ständig mit dem jeweils gegenüberliegenden Federbein 4 (2) verbunden, wobei aber die hydraulische Verbindung 82 einen derart geringen Strömungsquerschnitt aufweist (was gegebenenfalls durch eine in der Verbindung 72 angeordnete Drosselung 74 erreicht werden kann), daß in der ersten Teilkammer 56 im statischen, im wesentlichen strömungslosen Zustand praktisch der gleiche Druck (Steuerdruck) herrscht, wie in der Steuerdruckkammer 50. Wenn sich nun aber der Steuerdruck dynamisch ändert, so setzt sich diese Druckänderung aufgrund des Strömungswiderstandes der hydraulischen Verbindung 72 nur verzögert in Richtung der ersten Teilkammer 56 fort; es herrscht dort somit ein "modifizierter Steuerdruck" $p_{St1}'$ ($p_{St2}'$). Bei dieser Ausführung ist die zweite Teilkammer 58 obligatorisch mit dem zugehörigen Speicherdruck $p_{S1}$ ($p_{S2}$) beaufschlagt. Bei dieser beschriebenen Ausführung ist der Verschlußstößel 46 in einem statischen Zustand vollständig druckausgeglichen und steht somit in seiner den Bypass 40 öffnenden, von dem Ventilelement 30 beabstandeten Stellung. Bei einem dynamischen Anstieg des hydraulischen Druckes des gegenüberliegenden Federbeins und damit auch des Steuerdruckes des Dämpfungsventils wirkt dieser ansteigende Druck zunächst in der Steuerdruckkammer 50, wodurch der Verschlußstößel 46 in seine den Bypass 40 verschließende und das Ventilelement 30 mit einer Vorspannkraft beaufschlagende Stellung verschoben wird. Es ist hierdurch wiederum die oben bereits erläuterte Fahrzeugstabilisierung gewährleistet.

Die Ausführungsform der Fig. 2 könnte vereinfacht als "Federvariante" bezeichnet werden, während es sich bei der Ausführung nach Fig. 3 praktisch um eine "Druckvariante" handelt.

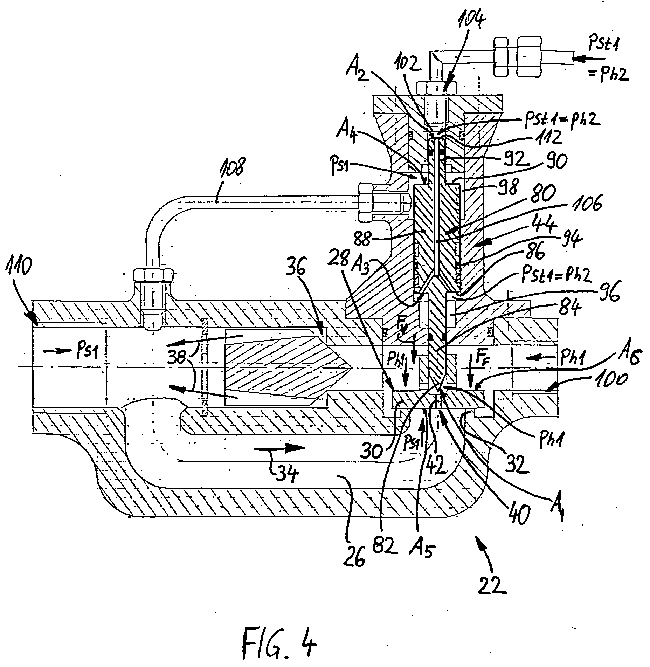

In der in Fig. 4 dargestellten, besonders vorteilhaften Ausführungsform der Erfindung besitzt die Verschlußeinrichtung 44 einen einstückigen Stufenkolben 80, der derart frei axialbeweglich geführt ist, daß er in Schließrichtung des Ventilelementes 30, d.h. von dessen dem Ventilsitz 32 abgekehrten Seite her, auf den den Bypass 40 bildenden Durchgangskanal 42 des Ventilelementes 30 wirkt. Hierzu ist an dem dem Ventilelement 30 zugekehrten Ende des Stufenkolbens 80 ein ventilkegelartiges Verschlußelement 82 gebildet, welches mit der Mündungsöffnung des Durchgangskanals 42 praktisch ein Sitzventil bildet. Der Stufenkolben 80 besteht aus einer endseitig das Verschlußelement 82 aufweisenden, stößelartigen ersten Stufe 84, einer an diese anschließend über eine erste Ringstufe 86 querschnittserweiterten, kolbenartigen zweiten Stufe 88 sowie einer an diese anschließend über eine zweite Ringstufe 90 querschnittsreduzierten dritten Stufe 92. Jede dieser drei Stufen des Stufenkolbens 80 ist zylindrisch ausgebildet, wobei die zweite Stufe 88 im Querschnitt am größten ist. Die Querschnitte der ersten und dritten Stufe 84, 92 können gleich oder geringfügig unterschiedlich sein. Die zweite Stufe 88 ist in einer Gehäusekammer kolbenartig geführt, die er über eine Umfangsdichtung 94 in zwei Teilkammern 96 und 98 unterteilt. Die erste Stufe 84 erstreckt sich von der ersten Teilkammer 96 aus umfänglich abgedichtet durch eine Gehäusedurchführung in Richtung des Ventilelementes 30, d.h. in den Teil des Strömungsweges 26, der über einen ersten Hydraulik-Anschluß 100 mit dem Federbein 2/4 zu verbinden ist. Die dritte Stufe 92 erstreckt sich von der zweiten Teilkammer 98 aus umfänglich abgedichtet in eine Steuerdruckkammer 102 hinein, in die ein Steuerdruck-Anschluß 104 mündet. Dabei ist die Steuerdruckkammer 102 insbesondere über einen durch den Stufenkolben 80 verlaufenden Kanal 106 mit der ersten Teilkammer 96 verbunden.

Ferner ist die zweite Teilkammer 98 - im dargestellten Beispiel über eine äußere Leitungsverbindung 108 - mit einem mit dem Federspeicher 16/18 zu verbindenden zweiten Hydraulik-Anschluß 110 verbunden.

Aufgrund dieser Ausgestaltung ist eine auf der Seite des Verschlußelementes 82 in axialer Bewegungsrichtung des Stufenkolbens 80 wirksame Fläche $A_1$ der ersten Stufe 84 mit dem hydraulischen Druck $p_{h1}$ (bzw. $p_{h2}$) des Federbeins 2 (4) beaufschlagt, wodurch eine axiale Kraft entsteht, die die Tendenz hat, den Stufenkolben 80 von dem Ventilelement 30 weg in seine den Bypass 40 öffnende Stellung zu verschieben. Eine von der der Steuerdruckkammer 102 zugekehrten Stirnfläche 112 gebildete Fläche $A_2$ der dritten Stufe 92 wird über den Steuerdruck-Anschluß 104 mit einem insbesondere hydraulischen Steuerdruck $p_{St1}$ bzw. $p_{St2}$ beaufschlagt, wodurch eine Kraftkomponente entsteht, die die Tendenz hat, den Stufenkolben 80 in seine den Bypass 40 schließende Stellung in Richtung des Ventilelementes 30 zu verschieben. Bei dem paarweisen Zusammenwirken jeweils zweier Federbeine 2, 4 ist es dann vorteilhaft, als Steuerdruck jeweils den hydraulischen Druck des anderen, gegenüberliegenden Federbeins 4 bzw. 2 zu verwenden; es gilt dann $p_{St1} = p_{h2}$ sowie $p_{St2} = p_{h1}$ (siehe Fig. 1).

Um nun zu vermeiden, daß bei eventuellen lastabhängigen, d.h. durch unterschiedliche Gewichtskräfte F1, F2 (vgl. Fig. 1) auftretenden Druckunterschieden zwischen den beiden hydraulischen Drücken $p_{h1}$ (= $p_{St2}$) und $p_{h2}$ (= $p_{St2}$) bereits eine ungewollte Reaktion der Verschlußeinrichtung 44 erfolgt, ist nun über die zweite Stufe 88 des Stufenkolbens 80 ein Druckausgleich derart vorgesehen, daß der Stufenkolben 80 in einem statischen Zustand stets in seiner den Bypass 40 öffnenden Stellung steht. Andererseits wird dieser Druckausgleich in einem dynamischen Zustand, und zwar insbesondere dann, wenn sich einer der beiden hydraulischen Drücke der beiden Federbeine 2, 4 dynamisch, d.h. unter Auftreten jeweils einer Strömung, ändert, so aufgehoben, daß der Stufenkolben 80 in seine den Bypass schließende Stellung gebracht wird. Hierdurch wird dann vorzugsweise auch das jeweilige Ventilelement 30 mit einer in Schließrichtung wirkenden Vorspannkraft $F_V$ beaufschlagt, die zu einer "härteren" Dämpfung einer in diesem Zustand auftretenden Ausfederungsströmung führt, was bei der "Überkreuz-Zusammenschaltung" eine effektive Stabilisierung bewirkt.

Für diesen Druckausgleich ist nun vorgesehen, daß die zweite Stufe 88 auf der Seite einer von der ersten Ringstufe 86 definierten Fläche $A_3$ mit dem jeweiligen hydraulischen Steuerdruck $p_{St1}$ bzw. $p_{St2}$ beaufschlagt ist, und eine auf der anderen Seite der zweiten Stufe 88 von der zweiten Ringstufe 90 definierte Fläche $A_4$ wird mit dem hydraulischen Druck $p_{S1}$ bzw. $p_{S2}$ des jeweils zugehörigen Federspeichers 16 bzw. 18 beaufschlagt.

Da im geschlossenen Zustand der Verschlußeinrichtung 44 kräftemäßig der Stufenkolben 80 mit dem Ventilelement 30 gekoppelt ist, ist bezüglich des Druckausgleichs ergänzend zu erwähnen, daß das Ventilelement 30 in seinem geschlossenen Zustand in Öffnungsrichtung über eine Fläche $A_5$ vom Speicherdruck beaufschlagt ist und in Schließrichtung über eine Fläche $A_6$ vom Federbeindruck, wobei zwangsläufig - aufgrund der Anlage zwischen dem Ventilelement und dem Ventilsitz 32 - stets $A_5 < A_6$ ist.

Bei dieser bevorzugten Ausführung nach Fig. 4 ist es nun sehr einfach möglich, in Anpassung an die jeweils auftretenden bzw. im jeweiligen Einsatz zu erwartenden Drücke die druckbeaufschlagten Flächen $A_1$ bis $A_4$ sowie auch $A_5$ und $A_6$ entsprechend auszulegen, um in Abhängigkeit vom jeweiligen Lastverhältnis den gewünschten Fahrkomfort und die gewünschten Stabilisierungseigenschaften zu gewährleisten. Insbesondere kann für einen "Straßen-LKW" folgende Auslegung vorteilhaft sein:

$$A_2 < A_3; A_1 < A_4; A_5 > A_4.$$

Für einen anderen Einsatz, beispielsweise in Kran- oder Geländefahrzeugen, ist gegebenenfalls auch folgende Auslegung möglich:

$$A_2 > A_3; A_1 \geq A_4; A_5 \geq A_4.$$

**Patentansprüche**

1.  Federungssystem insbesondere zur Radabstützung bei Kraftfahrzeugen, mit mindestens einem aus einem Zylinder (6) und einem darin zum Ein- und Ausfedern beweglich geführten Kolben (8) bestehenden, hydraulischen Federbein (2/4), wobei beim Einfedern des Federbeins (2/4) zumindest ein Teil des Hydraulikmediums insbesondere in einen hydropneumatischen Federspeicher (16/18) verdrängt wird und das Hydraulikmedium beim Ausfedern wieder zurückströmt, wobei zumindest die Ausfederungsströmung des Federbeins (2/4) über einen Strömungsweg (26) eines Dämpfungsventils (22/24) geführt und dadurch gedämpft wird, daß der Strömungsweg (26) mittels eines Ventilelementes (30) beim Auftreten der Ausfederungsströmung ständig alternierend geschlossen und wieder geöffnet wird, **gekennzeichnet durch** einen das Ventilelement (30) des Dämpfungsventils (22/24) überbrückenden, derart ausgebildeten Bypass (40), daß in einem statischen, im wesentlichen strömungslosen Zustand über den Bypass (40) ein Druckausgleich zwischen den beidseitig des Ventilelementes (30) angeordneten Abschnitten des Strömungsweges (26) gewährleistet ist und in einem dynamischen Zustand bei Auftreten einer Strömung der Bypass (40) diese Druckausgleichsfunktion im wesentlichen verliert.

2. Federungssystem nach Anspruch 1, **dadurch gekennzeichnet**, daß der Bypass (40) einen derart geringen Strömungsquerschnitt aufweist, daß er bei Aufreten der Strömung aufgrund eines hohen Strömungswiderstandes hinsichtlich seiner Druckausgleichsfunktion praktisch geschlossen ist, wobei der Bypass (40) insbesondere als ein sich durch das Ventilelement (30) erstreckender Durchgangskanal (42) ausgebildet ist.

3. Federungssystem nach Anspruch 1 oder 2, **dadurch gekennzeichnet**, daß das Ventilelement (30) zum Schließen und Öffnen des Strömungsweges (26) mit einem Ventilsitz (32) rückschlagventilartig zusammenwirkt, wobei das Ventilelement (30) einerseits in seiner Öffnungsrichtung mit dem hydraulischen Druck ($p_{S1}/p_{S2}$) des Federspeichers (16/18) und andererseits in seiner Schließrichtung mit dem hydraulischen Druck ($p_{h1}/p_{h2}$) des Federbeins (2/4) sowie vorzugsweise mit einer federelastischen Schließkraft ($F_F$) derart beaufschlagt ist, daß das Ventilelement (30) bei einer Ausfederungsströmung den Strömungsweg (26) selbsttätig schließt und öffnet, indem es bei Gleichgewicht der beiden hydraulischen Drücke ($p_{S1},p_{h1}/p_{S2}, p_{h2}$) oder bei einem bestimmten, relativ geringen Betrag einer Druckdifferenz schließt und bei einer in geschlossenem Zustand aufgrund eines Abfalles des Druckes ($p_{h1}/p_{h2}$) des Federbeins (2/4) zunehmenden Druckdifferenz bei Erreichen eines bestimmten Betrages der Druckdifferenz öffnet.

4. Federungssystem nach einem oder mehreren der Ansprüche 1 bis 3, **dadurch gekennzeichnet**, daß der Bypass (40) durch eine in Abhängigkeit von den jeweiligen Strömungs- und/oder Druckverhältnissen steuerbare Verschlußeinrichtung (44) geöffnet oder geschlossen wird.

5. Federungssystem nach Anspruch 4, **dadurch gekennzeichnet**, daß die Verschlußeinrichtung (44) zum Steuern des Bypasses (40) mit einem insbesondere hydraulischen Steuerdruck ($p_{S1}/p_{S2}$) beaufschlagbar ist, wobei vorzugsweise in einem Fahrzeug jeweils zwei Federbeine (2,4) und ihre entsprechend zugeordneten Federspeicher (16,18) und Dämpfungsventile (22,24) dadurch paarweise zusammenwirken, daß als Steuerdruck ($p_{St1}/p_{St2}$) für das Dämpfungsventil (22/24) des einen Federbeins (2/4) der hydraulische Druck ($p_{h2}/p_{h1}$) des anderen, in dem Fahrzeug insbesondere auf der gegenüberliegenden Fahrzeugseite angeordneten Federbeins (4/2) verwendet wird.

6. Federungssystem nach Anspruch 4 oder 5, **dadurch gekennzeichnet**, daß die Verschlußeinrichtung (44) in ihrer den Bypass (40) verschließenden Stellung das Ventilelement (30) in dessen Schließrichtung mit einer druckverhältnisabhängigen Vorspannkraft ($F_V$) beaufschlagt.

7. Federungssystem nach einem oder mehreren der Ansprüche 4 bis 6, **dadurch gekennzeichnet**, daß die Verschlußeinrichtung (44) mit einem Verschlußstößel (46) in Schließrichtung des Ventilelementes (30) auf den den Bypass (40) bildenden Durchgangskanal (42) des Ventilelementes (30) wirkt.

8. Federungssystem nach Anspruch 7, **dadurch gekennzeichnet**, daß der auf seiner dem Ventilelement (30) zugekehrten Seite mit dem hydraulischen Druck ($p_{h1}/p_{h2}$) des Federbeins (2/4) beaufschlagte Verschlußstößel (46) auf seiner dem Ventilelement (30) abgekehrten Seite umfänglich abgedichtet in einer Steuerdruckkammer (50) geführt und hier mit einem insbesondere hydraulischen Steuerdruck ($p_{s1}/p_{s2}$) beaufschlagt ist.

9. Federungssystem nach Anspruch 7 oder 8, **dadurch gekennzeichnet**, daß der Verschlußstößel (46) im statischen Zustand derart druckausgeglichen ist, daß er in einer den Bypass (40) öffnenden, ersten Stellung steht, und daß dieser Druckausgleich in einem dynamischen Zustand, und zwar insbesondere, wenn sich einer der beiden hydraulischen Drücke ($p_{h1}, p_{h2}$) der beiden Federbeine (2, 4) dynamisch ändert, so aufgehoben wird, daß der Verschlußstößel (46) in eine zweite, den Bypass (40) schließenden Stellung gebracht wird und dabei vorzugsweise das Ventilelement (30) mit der in seiner Schließrichtung wirkenden Vorspannkraft ($F_V$) beaufschlagt wird.

10. Federungssystem nach einem oder mehreren der Ansprüche 7 bis 9, **dadurch gekennzeichnet**, daß der Verschlußstößel (46) umfänglich abgedichtet und relativverschiebbar durch einen hülsenartigen Ringkolben (52) geführt ist, wobei der Ringkolben (52) seinerseits umfänglich abgedichtet und axialverschiebbar in einer Gehäusekammer (54) geführt ist und diese Gehäusekammer (54) in zwei Teilkammern (56, 58) unterteilt, und zwar in eine erste, über eine umfänglich abgedichtete Durchführung (60) für den Verschlußstößel (46) dem mit dem hydraulischen Druck ($p_{h1}/p_{h2}$) des Federbeins (2/4) beaufschlagten Bereich des Strömungsweges (26) benachbarte Teilkammer (56) sowie eine zweite, über eine abgedichtete Stößel-Durchführung (62) der Steuerdruckkammer (50) benachbarte Teilkammer (58), wobei im Bereich der zweiten Teilkammer (58) zwischen dem Ringkolben (52) und einem Widerlager (64) des Verschlußstößels (46) eine vorgespannte Druckfeder (66) derart angeordnet ist, daß in einem drucklosen Zustand einerseits der Verschlußstößel (46) mit dem Widerlager (64) in einer von dem Ventilelement (30) und dem Bypass (40) beabstandeten Anschlagstellung und andererseits der Ringkolben (52) in einer die erste Teilkammer (46) bis auf ein Miminalvolumen verkleinernden Anschlagstellung stehen.

11. Federungssystem nach Anspruch 10,
    **dadurch gekennzeichnet,** daß in der ersten Teilkammer (56) des Dämpfungsventils (22/24) des ersten Federbeins (2/4) im statischen Zustand der beiden Federbeine (2, 4) der hydraulische Druck ($p_{h2}/p_{h1}$) des zweiten Federbeins (4/2) gekammert wird.

12. Federungssystem nach Anspruch 10,
    **dadurch gekennzeichnet,** daß die erste Teilkammer (56) insbesondere über eine Drosselung (74) ständig mit der Steuerdruckkammer (50) verbunden ist.

13. Federungssystem nach einem oder mehreren der Ansprüche 10 bis 12,
    **dadurch gekennzeichnet,** daß die zweite Teilkammer (58) mit dem hydraulischen Druck ($p_{s1}/p_{s2}$) des entsprechend zugehörigen Federspeichers (16/18) beaufschlagt ist.

14. Federungssystem nach einem oder mehreren der Ansprüche 10 bis 13,
    **dadurch gekennzeichnet,** daß die jeweils in Verschieberichtung druckbeaufschlagbaren Querschnittsflächen des Verschlußstößels (46) und des Ringkolbens (52) zumindest annähernd gleich groß sind.

15. Federungssystem nach einem oder mehreren der Ansprüche 4 bis 6,
    **dadurch gekennzeichnet,** daß die Verschlußeinrichtung (44) einen zum Öffnen und Schließen des Bypasses (40) axial freibeweglich geführten, derart druckausgeglichenen Stufenkolben (80) aufweist, daß die Verschlußeinrichtung (44) im statischen, im wesentlichen strömungsfreien Zustand eine Öffnungstendenz und im dynamischen Zustand durch strömungsbedingte Änderung der Druckverhältnisse eine Schließtendenz besitzt.

16. Federungssystem nach Anspruch 15,
    **dadurch gekennzeichnet,** daß der Stufenkolben (80) aus einer stößelartigen, ein mit dem Bypass (40) zusammenwirkendes Verschlußelement (82) aufweisenden ersten Stufe (84), einer an diese anschließend über eine erste Ringstufe (86) querschnittsserweiterten, zweiten Stufe (88) sowie einer an diese anschließend über eine zweite Ringstufe (90) querschnittsreduzierten dritten Stufe (92) besteht, wobei die erste Stufe (84) auf der Seite des Verschlußelementes (82) mit dem hydraulischen Druck ($p_{h1}/p_{h2}$) des Federbeins (2/4) beaufschlagt ist, die zweite Stufe (88) auf der Seite der ersten Ringstufe (86) mit einem hydraulischen Steuerdruck ($p_{St1}/p_{St2}$) und auf der Seite der zweiten Ringstufe (90) mit dem hydraulischen Speicherdruck ($p_{S1}/p_{S2}$) beaufschlagt ist sowie die dritte Stufe (92) auf ihrer der ersten und zweiten Stufe (84, 88) abgekehrten Stirnfläche (112) mit dem Steuerdruck ($p_{St1}/p_{St2}$) beaufschlagt ist.

17. Federungssystem nach Anspruch 15 oder 16,
    **dadurch gekennzeichnet,** daß die auf der Seite des Verschlußelementes (82) der ersten Stufe (84) druckbeaufschlagte Fläche ($A_1$) kleiner als die Fläche ($A_4$) der zweiten Ringstufe (90) ist, und/oder daß die Flächengröße ($A_2$) der Stirnfläche (112) der dritten Stufe (92) kleiner als die Fläche ($A_3$) der ersten Ringstufe (86) ist, und/oder daß die Fläche ($A_4$) der zweiten Ringstufe (90) kleiner als die in Öffnungsrichtung druckbeaufschlagte Fläche ($A_5$) des Ventilelementes (30) des Ausfederungsventils (28) ist, wobei die im geschlossenen Zustand des Ausfederungsventils (28) in Öffnungsrichtung druckbeaufschlagte Fläche ($A_5$) des Ventilelementes (30) kleiner als seine gegenüberliegende, in Schließrichtung beaufschlagte Fläche ($A_6$) ist.

18. Federungssystem nach einem oder mehreren der Ansprüche 1 bis 17,
    **gekennzeichnet durch** ein hydraulisch zu dem von dem Ventilelement (30) und dem Ventilsitz (32) gebildeten Ventil (28) parallel geschaltetes, hinsichtlich der Strömungsrichtung gegensinnig wirkendes Rückschlagventil (36), welches bei Auftreten einer Einfederungsströmung vom Federbein (2/4) zum Federspeicher (16/18) im wesentlichen ohne Drosselwirkung öffnet und bei einer Ausfederungsströmung schließt.

19. Dämpfungsventil (22, 24), insbesondere zur Verwendung in einem Federungssystem nach einem oder mehreren der vorhergehenden Ansprüche, mit einem in einem Strömungsweg (26) für ein Hydraulikmedium derart angeordneten und derart ausgebildeten Ventilelement (30), daß der Strömungsweg (26) bei einer Strömung des Hydraulikmediums zur Erzeugung einer Dämpfungswirkung durch das Ventilelement (30) ständig alternierend geschlossen und wieder geöffnet wird,
    **gekennzeichnet durch** einen das Ventilelement (30) überbrückenden, derart ausgebildeten Bypass (40), daß in einem statischen, im wesentlichen strömungslosen Zustand über den Bypass (40) ein Druckausgleich zwischen den beidseitig des Ventilelementes (30) angeordneten Abschnitten des Strömungsweges (26) gewährleistet ist und in einem dynamischen Zustand bei Auftreten einer Strömung der Bypass (40) diese Druckausgleichsfunktion im wesentlichen verliert.

20. Dämpfungsventil nach Anspruch 19, **gekennzeichnet durch** eine den Bypass (40) in Abhängigkeit von den jeweiligen Strömungs- und/oder Druckverhältnissen öffnende oder schließende Verschlußeinrichtung (44).

21. Dämpfungsventil nach Anspruch 20, **dadurch gekennzeichnet,** daß die Verschlußeinrichtung (44) eines oder mehrere der kennzeichnenden Merkmale eines oder mehrerer der Ansprüche 7 bis 14 aufweist.

22. Dämpfungsventil nach Anspruch 20, **dadurch gekennzeichnet,** daß die Verschlußeinrichtung (44) einen zum Öffnen und Schließen des Bypasses (40) axial freibeweglich geführten, derart druckausgeglichenen Stufenkolben (80) aufweist, daß die Verschlußeinrichtung (44) im statischen, im wesentlichen strömungsfreien Zustand eine Öffnungstendenz und im dynamischen Zustand durch strömungsbedingte Änderung der Druckverhältnisse eine Schließtendenz besitzt.

23. Dämpfungsventil nach Anspruch 22, **dadurch gekennzeichnet,** daß der Stufenkolben (80) aus einer stößelartigen, ein mit dem Bypass (40) zusammenwirkendes Verschlußelement (82) aufweisenden ersten Stufe (84), einer an diese anschließend über eine erste Ringstufe(86) querschnittserweiterten, zweiten Stufe (88) sowie einer an diese anschließend über eine zweite Ringstufe (90) querschnittsreduzierten dritten Stufe (92) besteht, wobei die erste Stufe (84) mit der Seite des Verschlußelementes (82) in einem mit einem ersten Hydraulik-Anschluß (100) verbundenen Bereich des Strömungsweges (26) angeordnet ist, die zweite Stufe (88) eine auf der Seite der ersten Ringstufe (86) angeordnete erste Teilkammer (96) von einer auf der Seite der zweiten Ringstufe (90) angeordneten zweiten Teilkammer (98) trennt und die dritte Stufe (92) in einer Steuerdruckkammer (102) geführt ist, wobei die Steuerdruckkammer (102) und die erste Teilkammer (96) mit einem Steuerdruckanschluß (104) sowie die zweite Teilkammer (98) mit einem zweiten Hydraulik-Anschluß (110) verbunden sind.

24. Dämpfungsventil nach Anspruch 23, **dadurch gekennzeichnet,** daß der Steuerdruckanschluß (104) in die Steuerdruckkammer (102) mündet, wobei die Steuerdruckkammer (102) mit der ersten Teilkammer (96) vorzugsweise über mindestens einen durch den Stufenkolben (80) verlaufenden Kanal (106) verbunden ist.

25. Dämpfungsventil nach einem oder mehreren der Ansprüche 19 bis 24, **dadurch gekennzeichnet,** daß der Bypass (40) als ein sich durch das Ventilelement (30) erstreckender Durchgangskanal (42) ausgebildet ist, wobei vorzugsweise die Verschlußeinrichtung (44) zum Schließen des Bypasses (40) derart in Schließrichtung des Ventilelementes (30) gegen dessen Durchgangskanal (42) wirkt, daß eine Vorspannkraft ($F_V$) erzeugt wird.

## Claims

1. Suspension system, in particular for the wheels of motor vehicles, with at least one hydraulic spring strut (2/4) which consists of a cylinder (6) and a piston (8) guided inside the cylinder in a movable fashion in order to facilitate the compression and expansion movement of the strut, whereby at least a portion of the hydraulic medium is displaced in particular into a hydropneumatic spring reservoir (16/18) during the compression movement of the spring strut (2/4), and said hydraulic medium flows back into the spring strut during the expansion movement; whereby at least the expansion flow of the spring strut (2/4) is conveyed through a flow path (26) of a damping valve (22/24) and damped due to the fact that the flow path (26) is continuously closed and re-opened in an alternating fashion by means of a valve element (30) once the expansion flow is present, characterized by a bypass (40) which bypasses the valve element (30) of the damping valve (22/24) and is constructed such that a pressure compensation between sections of the flow path (26) arranged on both sides of the valve element (30) is ensured by means of the bypass (40) in a static condition in which essentially no flow is present and that the bypass (40) essentially loses this pressure compensation function in a dynamic condition once a flow is present.

2. Suspension system according to Claim 1, characterized in that the bypass (40) has a flow cross-section which is reduced such that it is substantially closed in regard to its pressure compensation function due to a high flow resistance once a flow is present, whereby the bypass (40) is in particular constructed as a through channel (42) extending through the valve element (30).

3. Suspension system according to Claim 1 or Claim 2,

characterized in that the valve element (30) co-operates with a valve seat (32) in the manner of a non-return valve in order to open and close the flow path (26), whereby the valve element (30) is acted upon in its opening direction by the hydraulic pressure ($p_{s1}/p_{s2}$) of the spring reservoir (16/18) and in its closing direction by the hydraulic pressure ($p_{h1}/p_{h2}$) of the spring strut (2/4) as well as preferably with an elastic closing force ($F_F$) in such a way that the valve element (30) automatically closes and opens the flow path (26) during an expansion flow, due to the fact that the valve element closes if an equilibrium of pressure or a certain, relatively small, pressure differential exists between the two hydraulic pressures ($p_{s1}, p_{h1}/p_{s2}, p_{h2}$); and that said valve element opens if the pressure differential increases in the closed position due to a drop of the pressure ($p_{h1}/p_{h2}$) of the spring strut (2/4) once a certain pressure differential has been reached.

4. Suspension system according to one or several of Claims 1 to 3,
characterized in that the bypass (40) is opened or closed by a locking device (44) which may be controlled in accordance with the respective flow and/or pressure ratios.

5. Suspension system according to Claim 4,
characterized in that the locking device (44) may be acted on by an in particular hydraulic control pressure ($p_{s1}/p_{s2}$) in order to control the bypass (40), whereby preferably two spring struts (2,4) and their respective spring reservoirs (16,18) and damping valves (22,24) arranged in a vehicle co-operate in pairs due to the fact that the hydraulic pressure ($p_{h2}/p_{h1}$) of the one spring strut (4/2) arranged on the opposite side of the vehicle is used as the control pressure ($p_{st1}/p_{st2}$) for the damping valve (22/24) of the other spring strut (2/4).

6. Suspension system according to Claim 4 or Claim 5,
characterized in that the locking device (44) acts upon the valve element (30) in its closing direction with a prestress force ($F_v$) which depends on the pressure ratio in the position in which it closes the bypass (40).

7. Suspension system according to one or several of Claims 4 to 6,
characterized in that the locking device (44) acts upon a through channel (42) of the valve element (30) forming the bypass (40) in the closing direction of the valve element (30) via a locking tappet (46).

8. Suspension system according to Claim 7,
characterized in that the locking tappet (46) which is, on the side facing the valve element (30), acted on by the hydraulic pressure ($p_{h1}/p_{h2}$) of the spring strut (2/4), is guided in a control pressure chamber (50) and sealed around its periphery on the side opposite the valve element (30); and that said locking tappet is on this side acted on by an in particular hydraulic control pressure ($p_{s1}/p_{s2}$).

9. Suspension system according to Claim 7 or Claim 8,
characterized in that the locking tappet (46) is, in the static condition, pressure-compensated in such a way that it is in a first position which opens the bypass (40); and that said pressure compensation is, in a dynamic condition, and in particular when one of the two hydraulic pressures ($p_{h1}$, $p_{h2}$) of the two spring struts (2, 4) is changed dynamically, eliminated such that the locking tappet (46) is moved into a second position in which it closes the bypass (40); and that the valve element (30) is, during this dynamic condition, preferably acted on by a prestress force ($F_v$) which acts in its closing direction.

10. Suspension system according to one or several of Claims 7 to 9,
characterized in that the locking tappet (46) is sealed around its periphery and guided by a sleeve-like annular piston (52) such that it may be moved relative to the same, whereby the annular piston (52) is in turn sealed around its periphery and guided such that it may be moved axially in a housing chamber (54); and that this housing chamber (54) is divided into two partial chambers (56, 58), namely into a first partial chamber (56) which is situated adjacent to the area of the flow path (26) which is acted on by the hydraulic pressure ($p_{h1}/p_{h2}$) of the spring strut (2/4) via a peripherally sealed lead-through (60) for the locking tappet (46), as well as a second partial chamber (58) which is connected with the control pressure chamber (50) via a sealed tappet lead-through (62), whereby a prestressed compression spring (66) is arranged within the area of the second partial chamber (58) between the annular piston (52) and an abutment (64) of the locking tappet (46) in such a way that the locking tappet (46) with the abutment (64) is, in a pressureless condition, situated in a limiting position at a distance from the valve element (30) and the bypass (40), and the annular piston (52) is situated in a limiting position which reduces the volume in the first partial chamber (46) to a minimum.

11. Suspension system according to Claim 10,
characterized in that the hydraulic pressure ($p_{h2}/p_{h1}$) of the second spring strut (4/2) is stored in the first partial chamber (56) of the damping valve (22/24) of the first spring strut (2/4) in the static condition of both spring struts (2, 4).

12. Suspension system according to Claim 10, characterized in that the first partial chamber (56) is continuously connected with the control pressure chamber (50) in particular by means of a throttle (74).

13. Suspension system according to one or several of Claims 10 to 12, characterized in that the second partial chamber (58) is acted on by the hydraulic pressure ($p_{s1}/p_{s2}$) of the respective spring reservoir (16/18).

14. Suspension system according to one or several of Claims 10 to 13, characterized in that the cross-sectional surfaces of the locking tappet (46) and the annular piston (52) which may be acted on by a pressure in the moving direction have at least approximately the same size.

15. Suspension system according to one or several of Claims 4 to 6, characterized in that the locking device (44) is provided with a differential piston (80) which is guided in the axial direction in a freely movable fashion in order to open and close the bypass (40) and is pressure-compensated in such a way that the locking device (44) has a tendency to open in the static condition in which essentially no flow is present, and a tendency to close in the dynamic condition on account of a change in the pressure ratios due to a flow.

16. Suspension system according to Claim 15, characterized in that the differential piston (80) consists of a first stage (84) which is provided with a tappet-like closing element (82) which co-operates with the bypass (40); a second stage (88) which has a widened cross-section and adjoins the aforementioned first stage via a first annular stage (86); and a third stage (92) which has a reduced cross-section and adjoins the aforementioned second stage via a second annular stage (90), whereby the first stage (84) is, on the side of the closing element (82), acted on by the hydraulic pressure ($p_{h1}/p_{h2}$) of the spring strut (2/4), the second stage (88) is, on the side of the first annular stage (86), acted on by a hydraulic control pressure ($p_{st1}/p_{st2}$) and, on the side of the second annular stage (90), acted on by the hydraulic reservoir pressure ($p_{s1}/p_{s2}$); and the third stage (92) is, on its face surface (112) opposite the first and second stage (84, 88), acted on by the control pressure ($p_{st1}/p_{st2}$).

17. Suspension system according to Claim 15 or Claim 16, characterized in that the surface ($A_1$) which is acted on by a pressure on the side of the closing element (82) of the first stage (84) is smaller than the surface ($A_4$) of the second annular stage (90), and/or that the size of the surface ($A_2$) of the face surface (112) of the third stage (92) is smaller than the surface ($A_3$) of the first annular stage (86), and/or that the surface ($A_4$) of the second annular stage (90) is smaller than the surface ($A_5$) of the valve element (30) of the expansion valve (28) which is acted on by a pressure in the opening direction, whereby the surface ($A_5$) of the valve element (30) which is acted on by a pressure in the opening direction in the closed condition of the expansion valve (28) is smaller than its opposite surface ($A_6$), which is acted on in the closing direction.

18. Suspension system according to one or several of Claims 1 to 17, characterized by a non-return valve (36) which acts opposite the flow direction and is switched in parallel with the valve (28) formed by the valve element (30) and the valve seat (32), which non-return valve opens substantially without a throttling effect once a compression flow from the spring strut (2/4) to the spring reservoir (16/18) is present, and closes once an expansion flow is present.

19. Damping valve (22, 24), in particular for use in a suspension system in accordance with one or several of the preceding claims, with a valve element (30) which is arranged in a flow path (26) for a hydraulic medium and constructed in such a way that the flow path (26) is continuously closed and reopened in an alternating fashion by the valve element (30) during a flow of the hydraulic medium in order to produce a damping effect, characterized by a bypass (40) which bypasses the valve element (30) and is constructed in such a way that a pressure compensation between sections of the flow path (26) arranged on both sides of the valve element (30) is ensured by means of the bypass (40) in a static condition in which essentially no flow is present and that the bypass (40) essentially loses this pressure compensation function in a dynamic condition in which a flow is present.

20. Damping valve according to Claim 19, characterized by a locking device (44) which opens or closes the bypass (40) in accordance with the respective flow and/or pressure ratios.

21. Damping valve according to Claim 20, characterized in that the locking device (44) is provided with one or several of the characterizing features of one or several of Claims 7 to 14.

22. Damping valve according to Claim 20, characterized in that the locking device (44) is provided with a differential piston (80) which is guided in the axial direction in a freely movable fashion in order to open and close the bypass (40) and is pressure-compensated in such a way that the locking device (44) has a tendency to open in the static condition in which essentially no flow is present and a tendency to close in the dynamic condition on account of a change in the pressure ratios due to a flow.

23. Damping valve according to Claim 22,
characterized in that the differential piston (80) consists of a tappet-like first stage (84) which is provided with a closing element (84) which co-operates with the bypass (40), a second stage (88) which has a widened cross-section and adjoins the aforementioned first stage via a first annular stage (86), and a third stage (92) which has a reduced cross-section and adjoins the aforementioned second stage via a second annular stage (90), whereby the first stage (84) is, with the side of the closing element (82), arranged in an area of the flow path (26) which is connected with a first hydraulic connection (100), the second stage (88) separates a first partial chamber (96) arranged on the side of the first annular stage (86) from a second partial chamber (98) arranged on the side of the second annular stage (90), and the third stage (92) is guided within a control pressure chamber (102), whereby the control pressure chamber (102) and the first partial chamber (96) are connected with a control pressure connection (104) and the second partial chamber (98) is connected with a second hydraulic connection (110).

24. Damping valve according to Claim 23,
characterized in that the control pressure connection (104) exits into the control pressure chamber (102), whereby the control pressure chamber (102) is connected with the first partial chamber (96) preferably via at least one channel (106) extending through the differential piston (80).

25. Damping valve according to one or several of Claims 19 to 24,
characterized in that the bypass (40) is constructed as a through channel (42) extending through the valve element (30), whereby the locking device (44) acts against the through channel (42) of the valve element (30) in the closing direction of the latter in order to close the bypass (40) such that a prestress force ($F_v$) is produced.

**Revendications**

1. Système de suspension, en particulier pour le support des roues de véhicules à moteur, comportant au moins une jambe de force à ressort hydraulique (2/4), constituée d'un cylindre (6) et d'un piston (8) guidé dans celui-ci pour la détente et la compression, une partie au moins de l'agent hydraulique étant en particulier poussée dans un ressort accumulateur hydropneumatique (16, 18) et l'agent hydraulique refluant lors de la détente lorsque la jambe de force à ressort (2/4) est comprimée, au moins le flux de détente de la jambe de force à ressort (2/4) étant guidé le long d'une voie (26) d'une soupape d'amortissement (22/24) et amorti du fait que la voie (26) est continuellement ouverte et fermée en alternance au moyen d'un élément de soupape (30) lorsqu'un flux de détente survient, caractérisé par un conduit de dérivation (40) qui court-circuite l'élément de soupape (30) de la soupape d'amortissement (22/24) et qui est formé de manière à ce que, dans un état statique, sensiblement sans flux, le conduit de dérivation (40) assure l'équilibrage de la pression entre les portions de la voie (26) situées de part et d'autre de l'élément de soupape (30), et que, dans un état dynamique, lorsqu'un flux apparaît, le conduit de dérivation (40) perde sensiblement ladite fonction d'équilibrage de la pression.

2. Système de suspension selon la revendication 1, caractérisé en ce que le conduit de dérivation (40) présente une section de passage tellement faible qu'il est pratiquement fermé en ce qui concerne sa fonction d'équilibrage de la pression lorsqu'un flux apparaît, ce fait étant dû à une résistance hydraulique élevée, le conduit de dérivation (40) ayant en particulier la forme d'un canal de passage (42) s'étendant à travers l'élément de soupape (30).

3. Système de suspension selon la revendication 1 ou 2,
caractérisé en ce que l'élément de soupape (30) d'ouverture et de fermeture de la voie de passage (26) coopère avec un siège de soupape (32) à la manière d'une soupape anti-retour, l'élément de soupape (30) étant soumis d'une part, dans sa direction d'ouverture, à la pression hydraulique ($p_{s1}$, $p_{s2}$) du ressort accumulateur (16/18) et d'autre part, dans sa direction de fermeture, à la pression hydraulique ($p_{h1}$, $p_{h2}$) de la jambe de force à ressort (2/4), et soumis de préférence également à une force élastique de fermeture ($F_F$)de manière à ce que, lors d'un flux de détente, l'élément de soupape (30) ferme et ouvre automatiquement la voie (26) en effectuant la fermeture lors d'un équilibre entre les deux pressions hydrauliques ($p_{s1}$, $p_h/p_{s2}$, $p_{h2}$) ou lors d'une différence de pression déterminée, relativement faible, et en effectuant une ouverture lors d'une augmentation de la différence de pression se produisant dans l'état fermé du fait de la chute de la pression ($p_{h1}$, $p_{h2}$) de la jambe de force à ressort (2/4) lorsque cette différence atteint une valeur prédéterminée.

4. Système de suspension selon l'une ou plusieurs des revendications 1 à 3,
caractérisé en ce que le conduit de dérivation (40) est fermé et ouvert au moyen d'un dispositif de fermeture (44) commandable en fonction des conditions de flux et/ou de pression.

5. Système de suspension selon la revendication 4, caractérisé en ce que le dispositif de fermeture (44) qui commande le conduit de dérivation (40) peut être soumis à une pression de commande en particulier hydraulique ($p_{s1}$, $p_{s2}$), respectivement deux jambes de force à ressort (2/4) d'un véhicule et leurs ressorts accumulateurs (16, 18) et soupapes d'amortissement (22, 24) associés coopérant par paires du fait que l'on utilise en tant que pression de commande ($p_{st1}$, $p_{st2}$) de la soupape d'amortissement (22/24) de l'une des jambes de force à ressort (2/4), la pression hydraulique ($p_{h2}$, $p_{h1}$) de l'autre jambe de force à ressort (4/2) disposée du côté opposé dans le véhicule.

6. Système de suspension selon la revendication 4 ou 5, caractérisé en ce que, dans sa position qui ferme le conduit de dérivation (40), le dispositif de fermeture (44) applique sur l'élément de soupape (30), dans la direction de fermeture de celui-ci, une force de précontrainte ($F_v$) fonction des conditions de pression.

7. Système de suspension selon l'une ou plusieurs des revendications 4 à 6, caractérisé en ce qu'un poussoir de fermeture (46) du dispositif de fermeture (44) agit dans la direction de fermeture de l'élément de soupape (30) sur le canal de passage (42) de l'élément de soupape (30) qui constitue le conduit de dérivation (40).

8. Système de suspension selon la revendication 7, caractérisé en ce que le poussoir de fermeture (46) dont la face en regard de l'élément de soupape (30) est soumise à la pression hydraulique ($p_{h1}$, $p_{h1}$) de la jambe de force à ressort (2/4), et qui est étanché sur sa périphérie du côté opposé à l'élément de soupape (30), est guidé dans une chambre de commande (50) et soumis ici à une pression de commande ($p_{s1}$, $p_{s2}$) en particulier hydraulique.

9. Système de suspension selon la revendication 7 ou 8, caractérisé en ce que le poussoir de fermeture (46) dans son état statique est en équilibre de pression tel qu'il se trouve dans une première position qui ouvre le conduit de dérivation (40), et en ce que cet équilibrage de la pression est annulé dans un état dynamique, en particulier lors d'un changement dynamique de l'une des deux pressions hydrauliques ($p_{h1}$, $p_{h2}$) des deux jambes de force à ressort (2, 4), de manière à ce que le poussoir de fermeture (46) soit amené dans une deuxième position où il ferme le conduit de dérivation (40) et charge de préférence l'élément de soupape (30) de sa force

de précontrainte ($F_v$) agissant dans la direction de fermeture de celui-ci.

10. Système de suspension selon l'une ou plusieurs des revendications 7 à 9, caractérisé en ce que le poussoir de fermeture (46), étanché sur sa périphérie et déplaçable de manière relative, est guidé à travers un piston annulaire (52) en forme de manchon, le piston annulaire (52), étanché à son tour sur sa périphérie et déplaçable dans la direction axiale, étant guidé dans une chambre de boîtier (54), cette chambre (54) étant partagée en deux chambres partielles (56, 58), à savoir une première chambre partielle (56) voisine de la région de la voie (26) soumise à la pression hydraulique ($p_{h1}$, $p_{h2}$) de la jambe de force à ressort (2/4) par un passage (60) à périphérie étanchée par le poussoir de fermeture (46), ainsi qu'une deuxième chambre partielle (58) voisine de la chambre de pression de commande (50) grâce à un passage étanche (62) du poussoir, un ressort de pression précontraint (66) étant disposé dans la région de la deuxième chambre partielle (58) entre le piston annulaire (52) et une butée (64) du poussoir de fermeture (46), de manière à ce que, dans un état sans pression, d'une part, le poussoir de fermeture (46) et sa butée (64), soient placés dans une position de butée à une certaine distance de l'élément de soupape (30) et du conduit de dérivation (40), et que, d'autre part, le piston annulaire (52) soit placé dans une position de butée qui réduit la première chambre partielle (56) à un volume minimal.

11. Système de suspension selon la revendication 10, caractérisé en ce que, dans la première chambre partielle (56) de la soupape d'amortissement (22/24) de la première jambe de force à ressort (2/4), la pression hydraulique ($p_{h2}$, $p_{h1}$) de la deuxième jambe de force à ressort (4/2) est stockée lorsque les deux jambes de force à ressort (2,4) sont dans un état statique.

12. Système de suspension selon la revendication 10, caractérisé en ce que la première chambre partielle (56) est reliée en continu à la chambre de commande de la pression (50) en particulier par un étranglement (74).

13. Système de suspension selon l'une ou plusieurs des revendications 10 à 12, caractérisé en ce que la deuxième chambre partielle (58) subit la pression hydraulique ($p_{s1}$, $p_{s2}$) du ressort accumulateur respectif associé (16/18).

14. Système de suspension selon l'une ou plusieurs des revendications 10 à 13, caractérisé en ce que les surfaces de coupe transversale du poussoir de fermeture (46) et du piston annulaire (12) subissant respectivement une pression dans la direction de déplacement ont au moins sensiblement les mêmes dimensions.

15. Système de suspension selon l'une ou plusieurs des revendications 4 à 6,
caractérisé en ce que le dispositif de fermeture (44) présente un piston à gradins (80) librement mobile dans la direction axiale pour ouvrir et fermer le conduit de dérivation (40) dont la pression est équilibrée de manière à ce que le dispositif de fermeture (44) tende à s'ouvrir dans l'état statique, sensiblement sans flux, et tende à se fermer dans l'état dynamique du fait d'un changement des conditions de pression dû au flux.

16. Système de suspension selon la revendication 15,
caractérisé en ce que le piston à gradins (80) comporte un premier redan (84) en forme de poussoir qui présente un élément de fermeture (82) coopérant avec le conduit de dérivation (40), suivi d'un deuxième redan (88) de coupe transversale élargie par un premier échelon annulaire (86), suivi à son tour d'un troisième redan ((92) dont la coupe transversale est réduite par un deuxième échelon annulaire (90), le premier redan (84) subissant, du côté de l'élément de fermeture (82), la pression hydraulique ($p_{h1}/p_{h2}$) de la jambe de force à ressort (2/4), le deuxième redan (88) subissant, du côté du premier échelon annlaire (86), une pression de commande ($p_{st1}$, $p_{st2}$), et du côté du deuxième échelon annulaire (90), une pression hydraulique d'accumulation ($p_{s1}$, $p_{s2}$), le troisième redan (92) subissant, sur sa face frontale (112) opposée au premier et au deuxième redan (84, 88), la pression de commande ($p_{st1}$, $p_{st2}$).

17. Système de suspension selon la revendication 15 ou 16,
caractérisé en ce que la surface ($A_1$) subissant une pression du côté de l'élément de fermeture (82) du premier redan (84) est plus petite que la surface ($A_4$) du deuxième échelon annulaire (90), et/ou en ce que les dimensions de surface ($A_2$) de la face frontale (112) du trisème redan (92) sont plus petites que la surface ($A_3$) du premier échelon annulaire (86), et/ou que la surface ($A_4$) du deuxième échelon annulaire (90) est plus petite que la surface ($A_5$) de l'élément de soupape (30) de la soupape de détente (28), la surface ($A_5$) de l'élément de soupape (30), subissant une pression dans la direction d'ouverture lorsque la soupape de détente (28) est fermée, étant plus petite que la surface ($A_6$) en regard chargée dans la direction de fermeture.

18. Système de suspension selon l'une ou plusieurs des revendications 1 à 17,
caractérisé par une soupape anti-retour (36) montée hydrauliquement en parallèle par rapport à la soupape (28) formée par l'élément de soupape (30) et le siège de soupape (32), et agissant en sens contraire par rapport à la direction du flux, ladite soupape anti-retour s'ouvrant sensiblement sans effet d'étranglement à l'apparition d'un flux de compression de la jambe de force à ressort (2/4) vers le ressort accumulateur (16/18), et se fermant lors d'un flux de détente.

19. Soupape d'amortissement (22, 24) utilisée en particulier dans un système de suspension selon l'une ou plusieurs des revendications précédentes, comportant un élément de soupape (30) agencé dans un passage (26) d'un flux d'agent hydraulique de manière telle et ayant une forme telle que l'élément de soupape (30) ferme et ouvre continuellement en alternance la voie (26) en présence d'un flux d'agent hydraulique en vue d'engendrer un effet d'amortissement,
caractérisée par un conduit de dérivation (40) qui court-circuite l'élément de soupape (30) et a une forme telle que, dans un état statique, sensiblement sans flux, on obtienne, grâce au conduit de dérivation (40), un équilibrage de la pression entre les portions de la voie (26) agencées de part et d'autre de l'élément de soupape (30), et que, dans un état dynamique, à l'apparition d'un flux, le conduit de dérivation (40) perde sensiblement cette fonction d'équilibrage de la pression.

20. Soupape d'amortissement selon la revendication 19,
caractérisée par un dispositif de fermeture (44) qui ouvre ou ferme le bypass (40) en fonction des conditions de flux et/ou de pression du moment.

21. Soupape d'amortissement selon la revendication 20,
caractérisée en ce que le dispositif de fermeture (44) présente l'une ou plusieurs des caractéristiques de l'une ou plusieurs des revendications 7 à 14.

22. Soupape d'amortissement selon la revendication 20,
caractérisé en ce que le dispositif de fermeture (44) présente un piston à gradins (80) librement mobile dans la direction axiale pour ouvrir et fermer le conduitde dérivation (40) et équilibré en pression de manière à ce que le dispositif de fermeture (44) tende à s'ouvrir dans l'état statique, sensiblement sans flux, et tende à se fermer dans l'état dynamique du fait d'un changement des conditions de pression dû au flux.

23. Soupape d'amortissement selon la revendication 22,
caractérisée en ce que le piston à gradins (80) comporte un premier redan (84) en forme de poussoir qui présente un élément de fermeture (82) coopérant avec le conduit de dérivation (40), suivi d'un deuxième redan (88) de coupe transversale élargie par un premier échelon annulaire (86), suivi à son tour d'un troisième redan (92) dont la coupe transversale est réduite par un deuxième échelon annulaire (90), le côté portant l'élément de fermeture (82) du premier redan (84) étant placé dans une région de la voie (26) qui est reliée à une première connexion hnydraulique (100), le deuxième redan (88) séparant une première chambre partielle (96) disposée du côté du premier échelon annulaire (86) d'une deuxième chambre annulaire (98) agencée du côté du deuxième échelon annulaire (90), le troisième redan (92) étant guidé dans une chambre de pression de commande (102), la première chambre partielle (96) étant reliée à une connexion de pression de commande (104), et la deuxième chambre partielle (98) étant reliée à une deuxième connexion hydraulique (110).

24. Soupape d'amortissement selon la revendication 23,
caractérisée en ce que la connexion de pression de commande (104) débouche dans la chambre de pression de commande (102), la chambre de pression de commande (102) étant reliée à la première chambre partielle (96) de préférence par au moins un canal passant par le piston à gradins (80).

25. Soupape d'amortissement selon l'une ou plusieurs des revendications 19 à 24,
caractérisée en ce que le conduit de dérivation (40) a la forme d'un canal passant (42) s'étendant à travers l'élément de soupape (30), le dispositif (44) de fermeture du conduit de dérivation (40) agissant dans la direction de fermeture de l'élément de soupape (30), à l'encontre du canal passant (42) de cet élément, de manière à engendrer une force de précontrainte ($F_v$).

FIG. 1

FIG. 2

FIG. 3

FIG. 4